(19) Europäisches Patentamt
European Patent Office
Office européen des brevets

(11) **EP 4 087 115 A1**

(12) **EUROPÄISCHE PATENTANMELDUNG**

(43) Veröffentlichungstag:
**09.11.2022   Patentblatt 2022/45**

(21) Anmeldenummer: **21172862.1**

(22) Anmeldetag: **07.05.2021**

(51) Internationale Patentklassifikation (IPC):
**H02P 21/06** (2016.01)       **H02P 3/18** (2006.01)
**H02J 7/00** (2006.01)       **H02J 7/14** (2006.01)

(52) Gemeinsame Patentklassifikation (CPC):
**H02P 21/06; H02J 7/00304; H02P 3/18;**
H02J 7/0063

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Andreas Stihl AG & Co. KG**
**71336 Waiblingen (DE)**

(72) Erfinder:
• **Kugler, Ingo**
  **71334 Waiblingen (DE)**
• **Dietrich, Simon**
  **71336 Waiblingen (DE)**
• **Braun, Jan Lukas**
  **71334 Waiblingen (DE)**

(74) Vertreter: **Wasmuth, Rolf et al**
**Patentanwälte**
**Dipl.Ing. W. Jackisch & Partner mbB**
**Menzelstrasse 40**
**70192 Stuttgart (DE)**

(54) **VERFAHREN ZUM ABBREMSEN EINES FELDGEFÜHRTEN ELEKTROMOTORS**

(57)     Die Erfindung betrifft ein Verfahren zum Abbremsen eines feldgeführten Elektromotors, der über eine Steuervorrichtung (2) an einem Akkupack (3) mit einer Versorgungsspannung (Uv) betrieben wird. Der Elektromotor (1) weist einen Stator (8) und einen Rotor (9) auf, wobei der Stator (8) mehrere Feldwicklungen (a, b, c) trägt. Zur Ausbildung eines antreibenden elektromagnetischen Drehfeldes im Motorbetrieb werden die Feldwicklungen (a, b, c) in Abhängigkeit der Drehlage des Rotors (9) von der Steuervorrichtung (2) bestromt. In einem rekuperativen Bremsbetrieb werden in den Feldwicklungen (a, b, c) des Stators (8) induzierte Spannungen einen rekuperativen Akkustrom (37) mit einer Rückspeiseleistung ($P_{Battery}$) bewirken, die den Akkupack (3) auflädt.

Der Motorstrom (7) setzt sich aus einem ersten, feldbildenden Motorstromanteil ($i_d$) und einem zweiten, momentbildenden Motorstromanteil ($i_q$) zusammen, wobei im Bremsbetrieb des Elektromotors (1) die Größe des momentbildenden Motorstromanteils ($i_q$) derart begrenzt wird, dass der den Akkupack (3) zugeführte Akkustrom (37) auf einen vorgegebenen Grenzwert festgelegt ist. Bei Annäherung des dem Akkupack (3) zugeführte Akkustroms (37) an den vorgegebenen Grenzwert, wird der feldbildende zweite Motorstromanteil ($i_d$) größer Null eingestellt, derart, dass der vorgegebene Grenzwert des dem Akkupack (3) zugeführte Akkustroms (37) nicht überschritten wird.

FIG. 3

**Beschreibung**

Die Erfindung betrifft ein Verfahren zum Abbremsen eines feldgeführten Elektromotors, der mit einer Steuervorrichtung an zumindest einem Akkupack mit einer Versorgungsspannung betrieben wird. Der Elektromotor weist einen Stator und einen Rotor auf, wobei der Stator mehrere Feldwicklungen trägt. In einem Motorbetrieb werden zur Ausbildung eines antreibenden elektromagnetischen Drehfeldes die Feldwicklungen in Abhängigkeit der Drehlage des Rotors von der Steuervorrichtung aus dem Akkupack bestromt, wobei sich der Motorstrom aus einem ersten, einen feldbildenden Motorstromanteil $i_d$ und einem zweiten, momentbildenden Motorstromanteil $i_q$ zusammensetzt. In einem rekuperativen Bremsbetrieb bewirken die bei laufendem Rotor in den Feldwicklungen des Stators induzierten Spannungen einen das Bremsmoment bestimmenden momentbildenden Motorstromanteil $i_q$, von dem ein Akkustrom für eine Rückspeiseleistung in den Akkupack abgeleitet wird. Der Akkustrom wird dem Akkupack zur Aufladung zugeführt.

Das Laden eines Akkupacks ist u. a. abhängig von seiner Kapazität und seinen Kenngrößen, d. h., ein Akkupack hat z. B. einen maximal zulässigen Entladestrom sowie einen maximal zulässigen Ladestrom. Derartige Kenngrößen sind auch abhängig vom Aufbau der im Akkupack verwendeten Einzelzellen, vom Typ der Einzelzellen (Lithium-Ionen, Lithium-Polymer, Lithium-Eisen oder auch Nickelmetallhydrid oder dgl. Energiespeicher), von der Temperatur des Akkupacks und dgl. Parameter.

Im rekuperativen Betrieb des Elektromotors darf der zur Aufladung des Akkupacks fließende Akkustrom einen maximal zulässigen Ladestrom des verwendeten Akkupacks nicht übersteigen. Der maximal zulässige Ladestrom des Akkupacks ist abhängig von dem momentbildenden Motorstromanteil ($i_q$) zum Bremsen des Rotors. Zugleich bestimmt die Größe des momentbildenden Motorstromanteils $i_q$ zum Bremsen des Rotors aber auch die Auslaufzeit des Elektromotors bis zu seinem Stillstand.

Wird ein elektrisches Arbeitsgerät mit einem Werkzeug betrieben, welches eine höhere Massenträgheit aufweist, können sich erhebliche Auslaufzeiten des das Werkzeug antreibenden Elektromotors ergeben. In Einzelfällen reichen der zulässige rekuperative Bremsstrom bzw. die Größe des im Bremsbetrieb momentbildenden Motorstromanteils $i_q$ des Elektromotors für die Abbremsung des Elektromotors innerhalb einer zulässigen Bremszeit nicht aus, so dass weitere aufwändige Maßnahmen zum Abbremsen des Elektromotors bzw. des Werkzeugs vorgesehen werden müssen.

Darüber hinaus ist die rekuperativen Bremsleistung des Elektromotors durch den maximal zulässigen Ladestrom bzw. Akkustroms des verwendeten Akkupacks bestimmt. Kommt ein Akkupack mit einem kleineren zulässigen Ladestrom zur Anwendung, führt dies zu einem kleineren rekuperativen Bremsstrom und damit zu einer geringeren rekuperativen Bremsleistung.

Der Erfindung liegt die Aufgabe zugrunde, ein Verfahren zum Abbremsen eines feldgeführten Elektromotors anzugeben, dessen rekuperativer Akkustrom zum Laden des Akkupacks den zulässigen maximalen Akkustrom zum Laden des Akkupacks nicht übersteigt, zugleich aber dennoch eine hohe Bremswirkung zum Abbremsen des Elektromotors möglich macht.

Die Aufgabe wird erfindungsgemäß mit einem Verfahren nach Anspruch 1 gelöst. Eine Vorrichtung zur Durchführung des Verfahrens ist im Anspruch 5 angegeben.

Im Bremsbetrieb des Elektromotors ist der rekuperative Akkustrom zum Laden des Akkupacks von dem das Bremsmoment bestimmenden momentbildenden Motorstromanteil $i_q$ des Motorstroms abhängig. Dieser momentbildende Motorstromanteil $i_q$ ist in seiner zulässigen Größe von dem zulässigen Akkustrom zum Laden des Akkupacks bestimmt, wobei der zulässige Akkustrom von den Kenngrößen des angeschlossenen Akkupacks bestimmt ist. Der zulässige Akkustrom wird auf einen vorgegebenen Grenzwert festgelegt, insbesondere auf einen maximal zulässigen Grenzwert festgelegt.

Nähert sich der Akkustrom zum Laden des Akkupacks dem vorgegebenen Grenzwert, wird Einfluss auf den feldbildenden zweiten Motorstromanteil $i_d$ genommen und dieser verändert. Neigt der Akkustrom zum Laden des Akkupacks dazu, den vorgegebenen Grenzwert zu überschreiten, wird der feldbildende Motorstromanteil $i_d$ ungleich Null eingestellt, derart, dass der vorgegebene Grenzwert des Akkustroms zum Laden des Akkupacks nicht überschritten wird.

Nach der Erfindung wird der feldbildende Motorstromanteil $i_d$ verändert, insbesondere größer oder kleiner Null eingestellt, derart dass der in seiner Größe von dem momentbildenden Motorstromanteil $i_q$ abhängige Akkustrom zum Laden des Akkupacks den vorgegebenen Grenzwert nicht überschreitet. Im rekuperativen Bremsbetrieb des Elektromotors wird der momentbildende Motorstromanteil $i_q$ in seiner Größe verändert um den Akkustrom einzustellen und den Grenzwerten entsprechend anzupassen.

Nach dem erfindungsgemäßen Verfahren wird mit der Steuervorrichtung zum Betrieb des Elektromotors im Bremsbetrieb sichergestellt, dass der aus dem momentbildenden Motorstromanteil $i_q$ abgeleitete Akkustrom den maximal zulässigen Ladestrom des angeschlossenen Akkupacks nicht überschreitet. Trotz der Begrenzung des momentbildenden Motorstromanteils ist dennoch eine schnelle und effektive Bremsung des Elektromotors innerhalb einer vorgegebenen Bremszeit möglich. Durch Variation des feldbildenden ersten Motorstromanteils $i_d$ ungleich Null wird unmittelbar der momentbildende Motorstromanteil $i_q$ in seiner Größe eingestellt und dabei zugleich ein feldbildender Stromfluss generiert, der eine elektrische Verlustleistung im Stator bewirkt. Diese durch den feldbildenden Motorstromanteil $i_d$ bedingte ohmsche Verlustleistung erhöht die Bremsleistung des Elektromotors, so dass ohne Ansteigen des von dem momentbildenden Motorstromanteil $i_q$ abhängigen Akkustroms über den vorgegebenen Grenzwert eine erhöhte, gesteuerte Bremsleistung zur Verfügung steht, die ein schnelles Abbremsen des Elektromotors und damit des Werkzeugs innerhalb einer vorgegebenen Bremszeit sicherstellt.

Der vorgegebene Grenzwert des rekuperativen Akkustroms entspricht vorteilhaft dem maximal zulässigen Ladestrom des jeweils angeschlossenen Akkupacks. Dies ermöglicht während dem Bremsvorgang eine maximale Energierückgewinnung zur Aufladung des Akkupacks bei gleichzeitig maximaler Bremsleistung.

In Weiterbildung der Erfindung erfolgt die Einstellung des feldbildenden ersten Motorstromanteils $i_d$ derart, dass im Bremsbetrieb des Elektromotors bei gleicher rekuperativer Rückspeiseleistung in den Akkupack die Bremsleistung ansteigt.

In einer möglichen Ausführungsform des Verfahrens wird im Betrieb des feldgeführten Elektromotors ein dreiphasiges Drehfeld aufgebaut, wobei die in den Feldwicklungen fließenden Ströme $i_a$, $i_b$, $i_c$ des dreiphasigen Drehfeldes als Vektoren des Drehfeldes erfasst werden. Diese erfassten Vektoren des Drehfeldes werden elektronisch in einen Motorstrom in zweidimensionaler Darstellung transformiert. Der aus dem ersten, einen feldbildenden Motorstromanteil $i_d$ und einem zweiten, das bremsende Drehmoment bestimmenden momentbildenden Motorstromanteil $i_q$ zusammengesetzte Motorstrom der zweidimensionalen Darstellung wird derart eingestellt, dass im Bremsbetrieb des Elektromotors der feldbildende zweite Motorstromanteil $i_d$ ungleich Null ist, z.B. größer Null oder kleiner Null eingestellt wird. Die Einstellung erfolgt vorzugsweise derart, dass der erste feldbildende Motorstromanteil $i_d$ derart eingestellt wird, dass der Akkustrom zum Laden des Akkupacks einen vorgegebenen Grenzwert nicht übersteigt. Nach Einstellung des feldbildenden zweiten Motorstromanteils $i_d$ in der zweidimensionalen Darstellung werden die Werte in das dreiphasige Drehfeld zurücktransformiert und über die Steuervorrichtung dem Elektromotor aufgeschaltet.

Eine Vorrichtung zur Durchführung des Verfahrens zum Abbremsen eines feldgeführten Elektromotors aus einem Stator und einem Rotor umfasst einen Akkupack zum Betrieb des Elektromotors über eine zwischen dem Elektromotor und dem Akkupack vorgesehene Steuervorrichtung zur Einstellung des Motorstroms. Der Stator des Elektromotors trägt mehrere Feldwicklungen, insbesondere drei in einem mechanischen Winkel von 120° zueinander versetzte Feldwicklungen, die zur Ausbildung eines elektromagnetischen Drehfeldes angeordnet sind. Die Steuervorrichtung ist ausgebildet, um im Motorbetrieb die Feldwicklungen des Stators in Abhängigkeit der Drehlage des Rotors in Drehrichtung antreibend zu bestromen, und ferner, um im Bremsbetrieb den aufgrund der in den Feldwicklungen des Stators induzierten Spannungen auftretende Motorstrom als Rückspeiseleistung dem Akkupack zur Aufladung zuzuführen. Die Steuervorrichtung weist einen Wandler auf, der ausgebildet ist, die in den Feldwicklungen fließenden Ströme $i_a$, $i_b$, $i_c$ des mehrphasigen Drehfeldes als Vektoren des Drehfeldes zu erfassen und elektronisch in einen Motorstrom in zweidimensionaler Darstellung zu transformieren. Der Motorstrom der zweidimensionalen Darstellung besteht aus einem feldbildenden ersten Motorstromanteil $i_d$ und einem das bremsende Drehmoment bestimmenden zweiten momentbildenden Motorstromanteil $i_q$. Die Steuervorrichtung weist ein Regelglied auf, das geeignet ist, die Motorstromanteile des zweidimensionalen Motorstroms in Abhängigkeit des Betriebszustandes des Elektromotors und von vorgegebenen Grenzwerten derart einzustellen, dass im Bremsbetrieb des Elektromotors der erste, feldbildende Motorstromanteil $i_d$ des Motorstroms ungleich Null ist, derart, dass bei gleicher Rückspeiseleistung in den Akkupack die Bremsleistung des Elektromotors ansteigt.

In vorteilhafter Weiterbildung der Erfindung kann der Elektromotor ein Synchronmotor sein. Der Elektromotor kann auch ein Asynchronmotor sein.

Vorteilhaft ist der Elektromotor der Antriebsmotor in einem handgeführten Arbeitsgerät, insbesondere in einem tragbaren Arbeitsgerät. Ein handgeführtes Arbeitsgerät kann z.B. ein Rasenmäher, eine Motorkettensäge, ein Trennschleifer, ein Freischneider oder dgl. Arbeitsgerät sein. Handgeführte, tragbare Arbeitsgeräte sind z.B. Motorkettensägen, Trennschleifer, Freischneider oder dgl. insbesondere akkubetriebene Arbeitsgeräte.

Der Elektromotor kann vorteilhaft auch als Antriebsmotor in einem bodengeführten Arbeitsgerät eingesetzt werden, so z.B. in einem Rasenmäher, einer Bodenfräse oder dgl. Arbeitsgerät.

Weitere Merkmale der Erfindung ergeben sich aus den weiteren Ansprüchen, der Beschreibung und der Zeichnung, in der nachfolgend ein Ausführungsbeispiel des Verfahrens sowie der Vorrichtung beschrieben ist. Die Merkmale der Ansprüche sowie die in der Beschreibung und in den Zeichnungen offenbarten Merkmale können im Rahmen der Erfindung untereinander, insbesondere in beliebiger Weise, kombiniert werden.

Es zeigen:

Fig. 1    in schematischer Darstellung den Grundaufbau einer Schaltungsanordnung zum Betrieb eines feldgeführten Elektromotors an einem Akkupack,

Fig. 2    eine schematische Darstellung eines feldgeführten Elektromotors mit im Stator um 120° zueinander versetzt angeordneten Feldwicklungen,

Fig. 3    in schematischer Darstellung eine vorzugsweise in der Steuervorrichtung vorgesehene Bremsschaltung zur Einstellung des Bremsstroms,

Fig. 4    in schematischer Darstellung den Elektromotor mit einem Motorstrom als rekuperativen Bremsstrom mit einem momentbildenden Motorstromanteil $i_q$ und mit einem zu Null eingestellten feldbildenden Motorstromanteil $i_d$,

Fig. 5    eine schematische Darstellung entsprechend Fig. 4 mit einem rekuperativen Bremsstrom mit einem momentbildenden Motorstromanteil $i_q$ und mit einem ungleich Null eingestellten feldbildenden Motorstromanteil $i_d$,

Fig. 6    in schematischer Darstellung eine Vorrichtung zur Einstellung der Motorstromanteile $i_q$ und $i_d$ des Motorstroms im Bremsbetrieb.

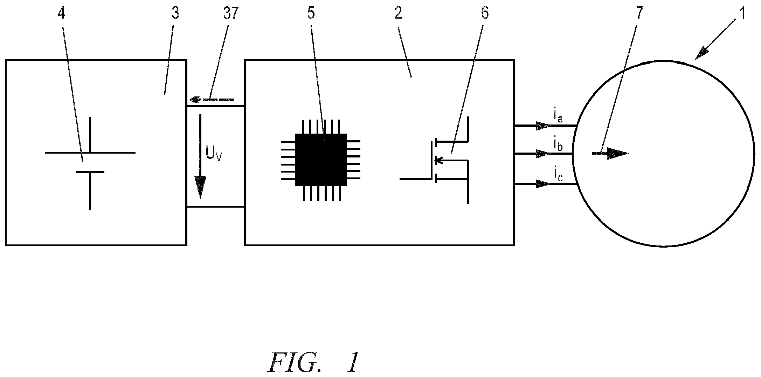

In Fig. 1 ist ein feldgeführter Elektromotor 1 dargestellt, der über eine Steuervorrichtung 2 aus einem Akkupack 3 mit einer Versorgungsspannung Uv betrieben ist. Der Akkupack 3 besteht aus einer Vielzahl von Einzelzellen 4, die innerhalb des Akkupacks 3 zu einem Zellverbund elektrisch zusammengeschaltet sind. Die Einzelzellen 4 können Lithium-Ionen-Zellen, Lithium-Polymer-Zellen, Lithium-Eisen-Zellen oder auch Einzelzellen anderen chemischen Aufbaus sein, z. B. NiCd, NiMh oder dgl. Zellen.

Die Steuervorrichtung 2 liegt an der Versorgungsspannung Uv des Akkupacks 3, die als Gleichspannung zur Verfügung steht, an. Eine Steuereinheit 5, insbesondere ein Mikroprozessor, steuert eine Ansteuerschaltung aus elektronischen Schaltelementen 6, insbesondere MOSFET's. Durch entsprechende Ansteuerung der Schaltelemente 6 fließen dem vorteilhaft als feldgeführter, dreiphasiger Elektromotor ausgebildeten Elektromotor 1 ein aus Betriebsströmen $i_a$, $i_b$ und $i_c$ bestehender Motorstrom 7 zu.

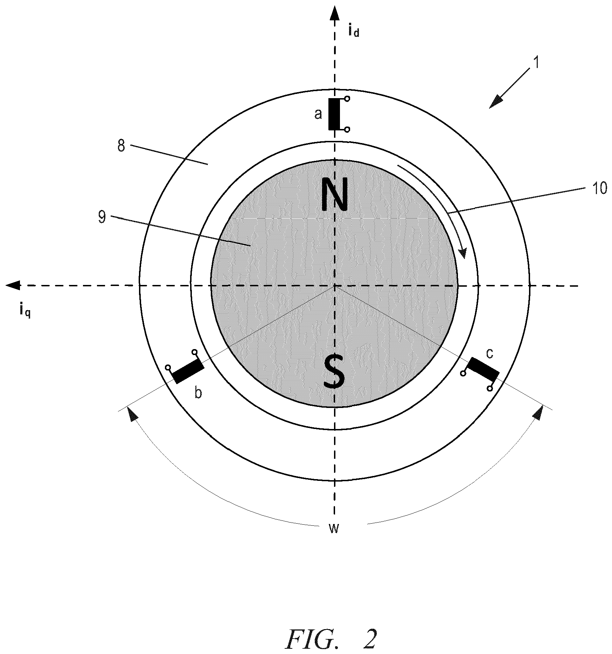

Wie in Fig. 2 dargestellt, weist der Elektromotor 1 einen Stator 8 und einen Rotor 9 auf. Der Stator 8 trägt Feldwicklungen a, b und c, die über den Kreisumfang des Stators 8 mit einem mechanischen Winkelabstand w von 120° angeordnet sind. Die in Fig. 1 gezeigten Betriebsströme $i_a$, $i_b$ und $i_c$ sind den jeweiligen Feldwicklungen a, b und c zugeordnet. Der Rotor 9 trägt zumindest einen Permanentmagneten mit den Magnetpolen N und S. Im Motorbetrieb des Elektromotors 1 bestromt die Steuereinheit 5 in Abhängigkeit der Drehlage des Rotors 9 die Feldwicklungen a, b und c zur Ausbildung eines antreibenden elektromagnetischen Drehfeldes in Drehrichtung 10.

Der Motorstrom 7 lässt sich im Motorbetrieb als auch im Bremsbetrieb grundsätzlich in einen ersten feldbildenden Motorstromanteil $i_d$ sowie einen zweiten, momentbildenden Motorstromanteil $i_q$ aufteilen. Der feldbildende Motorstromanteil $i_d$ bewirkt den Aufbau des elektromagnetischen Drehfeldes durch die Feldwicklungen a, b und c, während der Motorstromanteil $i_q$ ein antreibendes Drehmoment des Rotors 9 bewirkt. Im weiteren Sinne bewirkt der Motorstromanteil $i_q$ eine Wirkleistung und der Motorstromanteil $i_d$ eine Blindleistung des Elektromotors 1 im Betrieb.

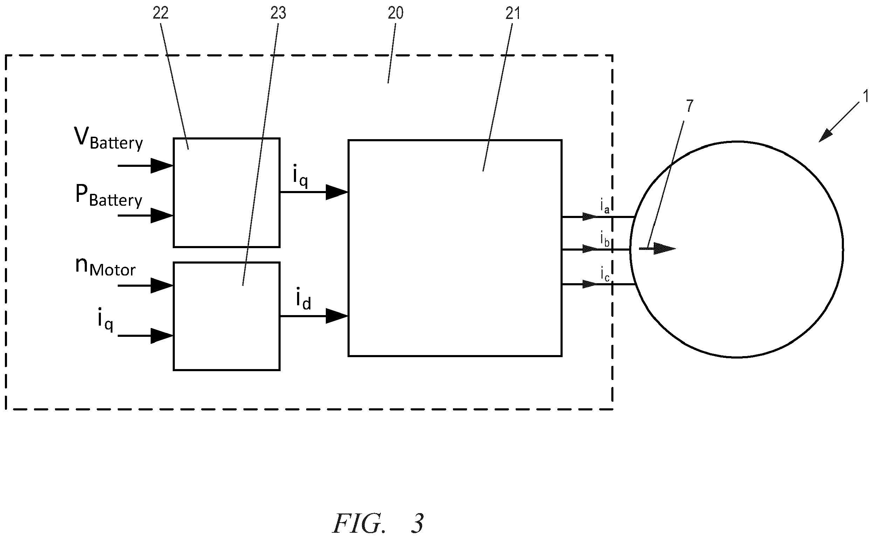

In bevorzugter Ausbildung der Steuervorrichtung 2 ist in dieser eine Bremsschaltung 20 vorgesehen, wie sie beispielhaft in Fig. 3 gezeigt ist. Die Bremsschaltung 20 kann auch als von der Steuervorrichtung 2 getrennte Schaltungsanordnung vorgesehen sein. In Fig. 3 ist eine schematisch dargestellte Bremsschaltung 20 mit dem Elektromotor 1 verbunden. Sie umfasst eine Ansteuerschaltung 21 zur Einstellung eines Bremsstroms, der auch als negativer Motorstrom 7 bezeichnet werden kann. Die Ansteuerschaltung 21 ist mit einer Überwachungsschaltung 22 des Akkupacks 3 verbunden, der die Spannung $V_{Battery}$ sowie die Leistung $P_{Battery}$ des Akkupacks 3 mitgeteilt ist. Aus diesen Größen bestimmt die Überwachungsschaltung 22 die Größe des rekuperativen Akkustroms 37, der dem Akkupack maximal zugeführt werden darf. Der Bremsstrom des Elektromotors 1 (negativer Motorstrom 7) teilt sich auf in einen momentbildenden Motorstromanteil $i_q$ und einen verlustbildenden, feldbildenden Motorstromanteil $i_d$. Der feldbildenden Motorstromanteil $i_d$ wird in Abhängigkeit der Motordrehzahl $n_{Motor}$ des Elektromotors 1 und dem aus den Kenngrößen des Akkupacks 3 bestimmten Akkustrom 37, der aus dem drehmomentbildenden Motorstromanteil $i_q$ abgeleitet ist, vorgegeben. So kann mit den Eingangsgrößen der Motordrehzahl $n_{Motor}$ und des die Größe des rekuperativen Akkustroms 37 bestimmenden Motorstromanteils $i_q$ aus einem Kennfeld oder einem Speicher 23 der einzustellende feldbildendende Motorstromanteil $i_d$ ausgelesen und der Ansteuerschaltung 21 vorgegeben werden.

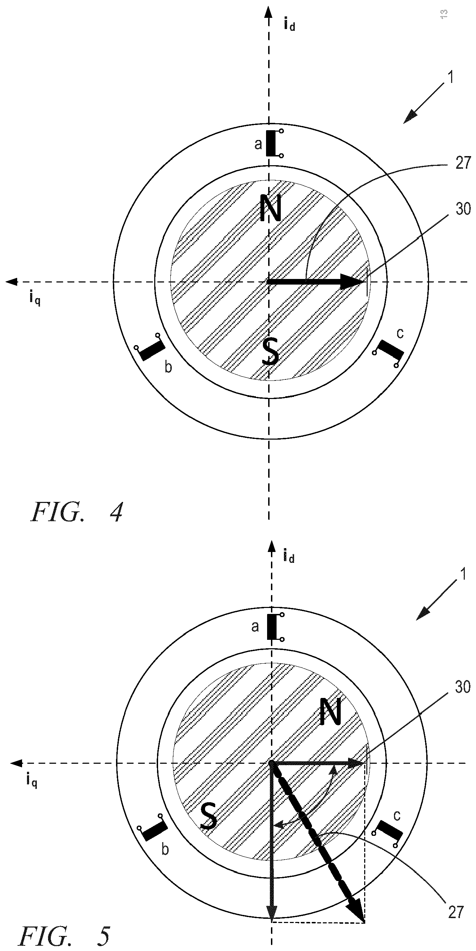

In Fig. 4 ist in schematischer Darstellung der Elektromotor 1 im Bremsbetrieb dargestellt. Der als negativer Motorstrom dargestellte Bremsstrom 27 ist ausschließlich von dem drehmomentbildenden Motorstromanteil $i_q$ bestimmt, da der feldbildenden Motorstromanteil $i_d$ zu Null eingestellt ist. Die Bremszeit des Elektromotors 1 ist wesentlich bestimmt durch den rekuperativen Bremsstrom 27, der dem momentbildenden Motorstromanteil $i_q$ entspricht. Der momentbildende Motorstromanteil $i_q$ bestimmt auch den Akkustrom 37 zum Aufladen des Akkupacks 3. Die sich im Bremsbetrieb ergebende rekuperative Rückspeiseleistung $P_{Battery}$ in den Akkupack 3 lässt sich in etwa nach folgender Formel abschätzen:

$$PB_{attery} = const = 1.5(i_q * p * \Psi_{PM} * \omega_{el} - R * i_q{}^2 - R * I_d{}^2) \quad mit \quad M \sim i_q \quad und \quad I_d = 0$$

und den Variablen:

$j_q$ = momentbildender Motorstromanteil

$p$ = Polpaarzahl

$\psi_{PM}$ = verketteter magnetischer Fluss

$\omega_{el}$ = elektrische Winkelgeschwindigkeit

$R$ = ohmscher Widerstand der Feldwicklungen

$I_d$ = feldbildender Motorstromanteil

Da der momentbildende Motorstromanteil iq begrenzt ist durch den maximal zulässigen Akkustrom 37 zum Laden des Akkupacks 3, kann zur Erhöhung der Bremsleistung des Elektromotors 1 der momentbildende Motorstromanteil iq nicht beliebig erhöht werden. Dies würde einhergehen mit einer Erhöhung des dem Akkupack 3 zufließenden Akkustroms (Ladestrom) und könnte damit zu einer elektrischen Überlastung des Akkupacks 3 führen.

Nach der Erfindung ist vorgesehen, den feldbildenden Motorstromanteil $i_d$ derart einzustellen, dass ohne Überschreiten des vorgegebenen Grenzwertes des rekuperativen Akkustroms 37 zum Laden des Akkupacks 3 der momentbildende Motorstromanteil $i_q$ nicht zu groß wird und dennoch die Bremsleistung des Elektromotors 1 erhöht ist. Dies ist schematisch in Fig. 5 dargestellt.

Aufgrund des Bremsbetriebs des Elektromotors 1 liegt der momentbildende Motorstromanteil $i_q$ und der feldbildenden Motorstromanteil $i_d$ im negativen Achsenbereich der schematischen Darstellung in Fig. 5. Der Bremsstrom 27 ist ein zusammengesetzter Vektor aus dem momentbildenden Motorstromanteil $i_q$ und dem feldbildenden Motorstromanteil $i_d$. Wie Fig. 5 deutlich zeigt, ist der Vektor des Bremsstroms 27 deutlich größer als der Vektor des Bremsstroms 27 in Fig. 4, der ausschließlich aus dem momentbildenden Motorstromanteil $i_q$ besteht. In Fig. 5 ist der feldbildende Motorstromanteil $i_d$ so groß gewählt, dass der momentbildende Motorstromanteil $i_q$ und damit der Akkustrom 37 zum Laden des Akkupacks nicht über einen zulässigen Grenzwert ansteigt. Dennoch ist der Bremsstrom 27 deutlich größer als in Fig. 4. Durch Einstellung der Größe des feldbildenden Motorstromanteils $i_d$ ist bei großer Bremsleistung eine präzise Einstellung des aus dem momentbildenden Motorstromanteils $i_q$ abgeleiteten Akkustroms 37 zum Laden des Akkupacks 3 gewährleistet, ohne dass der zulässige maximale Ladestrom in den Akkupack überschritten wird. Vorteilhaft kann ein Grenzwert 30 des momentbildenden Motorstromanteils $i_q$ derart festgelegt werden, dass der rekuperative Akkustrom 37 etwa, insbesondere genau, einem maximal zulässigen Ladestrom in den Akkupack 3 entspricht. Durch Einstellung des feldbildenden Motorstromanteils $i_d$ kann erreicht werden, dass im Bremsbetrieb des Elektromotors bei gleicher rekuperativer Rückspeiseleistung in den Akkupack 3 die Bremsleistung des Elektromotors 1 signifikant ansteigt. Die Rückspeiseleistung $P_{Battery}$ lässt sich wie folgt berechnen:

$$PB_{attery} = \text{const} = 1.5(i_q \cdot p \cdot \psi_{PM} \cdot \omega_{el} - R \cdot i_q{}^2 - R \cdot I_d{}^2) \quad \text{mit} \quad M \sim i_q \ \text{und} \ I_d \neq 0$$

In dem Ausführungsbeispiel nach Fig. 5 besteht zwischen dem drehmomentbildenden Motorstromanteil $i_q$ und dem feldbildenden Motorstromanteil $i_d$ eine Phasenverschiebung 33 von 90°. Die Einstellung des momentbildenden Motorstromanteils $i_q$ kann durch die Einstellung der Größe des feldbildenden Motorstromanteils $i_d$ erfolgen.

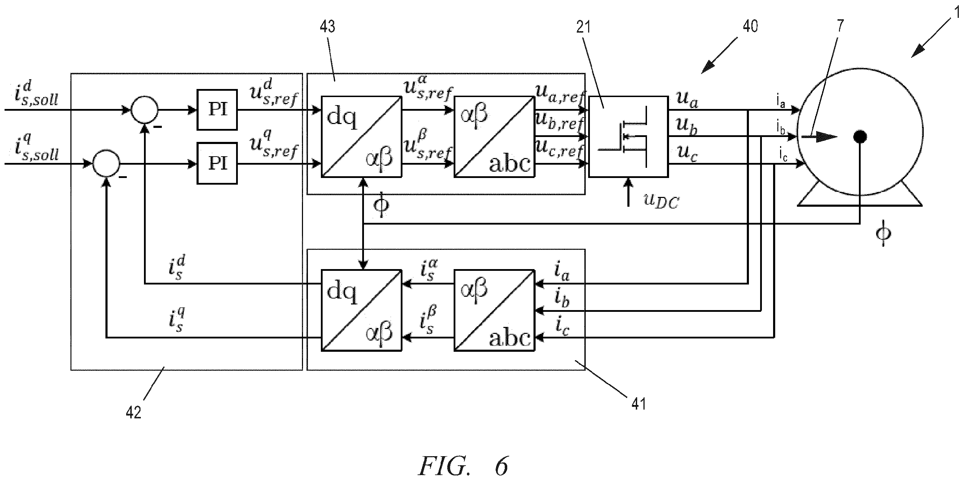

In Fig. 6 ist eine Vorrichtung 40 zur Durchführung des erfindungsgemäßen Verfahrens wiedergegeben. Die Steuervorrichtung 2 steuert das Drehfeld des Elektromotors 1 durch Ansteuerung der Feldwicklungen a, b, c, mit den Ansteuerspannungen $u_a$, $u_b$, $u_c$, wodurch sich die Betriebsströme $i_a$, $i_b$, $i_c$ der Feldwicklungen a, b, c ergeben, um in Abhängigkeit der Drehlage des Rotors diesen in Drehrichtung 10 drehend anzutreiben. Die Vorrichtung 40 ist mit einer entsprechend ausgebildeten Steuervorrichtung 2 derart ausgebildet, dass im Bremsbetrieb die in den Feldwicklungen a, b, c des Stators 8 induzierten Spannungen einen Bremsstrom 27 bewirken, dessen momentbildender Motorstromanteil $i_q$ eine rekuperativen Rückspeiseleistung $P_{Battery}$ in den Akkupack 3 bewirkt. Zur Steuerung der Motorstromanteile $i_q$ und $i_d$ des Bremsstroms 27 zwecks Erzielung einer hohen Bremsleistung ist ein Wandler 41 vorgesehen, der ausgebildet ist, die in den Feldspulen a, b, c fließenden Ströme $i_a$, $i_b$, $i_c$ des mehrphasigen Drehfeldes, insbesondere eines dreiphasigen Drehfeldes, als Vektoren des Drehfeldes zu erfassen und elektronisch in einen Motorstrom mit den Motorstromanteilen $i_d$, $i_q$ in zweiphasiger Darstellung zu transformieren. Der Bremsstroms bzw. der Motorstrom setzt sich zusammen aus dem ersten, feldbildenden Motorstromanteil $i_d$ und dem das Bremsmoment bestimmenden zweiten, momentbildenden Motorstromanteil $i_q$. Die Schaltungsanordnung weist ein Regelglied 42 auf, welches die Motorstromanteile $i_d$, $i_q$ des zweidimensionalen Bremsstroms 27 in Abhängigkeit des Betriebszustandes des Elektromotors 1 und von vorgegebenen Sollwerten $i_{dsoll}$, $i_{qsoll}$ derart einstellt, dass im Bremsbetrieb des Elektromotors 1 einerseits der erste, feldbildende Motorstromanteil $i_d$ des Bremsstroms 27 ungleich Null ist, derart, dass bei hoher Rückspeiseleistung $P_{Battery}$ in den Akkupack 3 die Bremsleistung des Elektromotors 1 ansteigt. Die vom Regelglied 42 vorgegebenen Sollwerte der zweidimensionalen Darstellung werden über einen weiteren Wandler 43 in die dreidimensionale Darstellung zurück transformiert und - z. B. als Spannungswerte $u_{aref}$, $u_{bref}$, $u_{cref}$ - der Steuervorrichtung 2 zur Ansteuerung des Elektromotors 1 zugeführt. Entsprechend den vorgegebenen Spannungswerten wird die Steuervorrichtung 2 Ansteuerspannungen $u_a$, $u_b$, $u_c$ einstellen, welche zu dem gewünschten Bremsstroms 27 mit dem vorgegebenen, das Bremsmoment bewirkenden Motorstromanteil $i_q$ und dem feldbildenden Motorstromanteil $i_d$ führt. Diese Einstellung der Motorstromanteile $i_d$, $i_q$ wird über die vom Wandler 41 dem Regelglied 42 zugeführten Werte permanent überwacht und korrigiert. Der Akkustrom 37 zum Laden des Akkupacks ist von dem momentbildenden Motorstromanteil $i_q$ bestimmt, wobei der Grenzwert des Akkustroms 37 auf den maximalen Ladestrom des angeschlossenen Akkupacks 3 festgelegt ist. Mit dem Grenzwert des Akkustroms 37 ist auch ein Grenzwert für den momentbildenden Motorstromanteil $i_q$ gegeben. Die Größe des momentbildenden Motorstromanteil $i_q$ ist von dem in seiner Größe veränderlichen feldbildenden Motorstromanteil $i_d$ bestimmt. Durch die bei der Einstellung des momentbildenden Motorstromanteils $i_q$ sich ergebende Größe des feldbildenden Motorstromanteils $i_d$ ist ein verbessertes Abbremsen des Elektromotors 1 möglich, so dass innerhalb einer vorgegebenen Bremszeit ein Stillstand des Elektromotors 1 gewährleistet ist.

Die Drehzahl des Elektromotors bzw. die Drehlage des Rotors 9 des Elektromotors wird erfasst und den Wandlern 41 und 43 zur Verarbeitung zugeführt.

Die Größe des momentbildenden Motorstromanteils $i_q$ setzt sich zusammen aus dem zum Laden des Akkupacks fließenden Akkustrom und den im Elektromotor anfallenden Verlusten sowie den elektronischen Verlusten der zwischen dem Elektromotor und dem Akkupack angeordneten Steuerung.

## Patentansprüche

1.  Verfahren zum Abbremsen eines feldgeführten Elektromotors (1),

    - mit einer Steuervorrichtung (2) zum Betrieb des Elektromotors (1) an zumindest einem Akkupack (3) mit einer Versorgungsspannung (Uv),
    - wobei der Elektromotor einen Stator (8) und einen Rotor (9) aufweist, und der Stator (8) mehrere Feldwicklungen (a, b, c) trägt,
    - und in einem Motorbetrieb zur Ausbildung eines antreibenden elektromagnetischen Drehfeldes die Feldwicklungen (a, b, c) in Abhängigkeit der Drehlage des Rotors (9) von der Steuervorrichtung (2) aus dem Akkupack (3) bestromt werden,
    - wobei der Motorstrom (7) aus einem ersten, einen feldbildenden Motorstromanteil ($i_d$) und einem zweiten, momentbildenden Motorstromanteil ($i_q$) zusammengesetzt ist,
    - und in einem rekuperativen Bremsbetrieb des Elektromotors (1) die bei laufendem Rotor (9) in den Feldwicklungen (a, b, c) des Stators (8) induzierten Spannungen einen momentbildenden Motorstromanteil ($i_q$) zum Bremsen des Rotors (9) bewirken,
    - wobei im rekuperativen Bremsbetrieb von dem momentbildenden Motorstromanteil ($i_q$) ein Akkustrom (37) mit einer Rückspeiseleistung ($P_{Battery}$) in den Akkupack abgeleitet wird,
    - wobei der Akkustrom (37) dem Akkupack (3) zur Aufladung zugeführt wird,

    **dadurch gekennzeichnet,**

    - **dass** im Bremsbetrieb des Elektromotors (1) die Größe des Akkustroms (37) auf einen vorgegebenen Grenzwert festgelegt wird,
    - und **dass** bei einer Annäherung der Größe des Akkustroms (37) an den vorgegebenen Grenzwert der feldbildende erste Motorstromanteil ($i_d$) ungleich Null eingestellt wird, derart, dass der vorgegebene Grenzwert des Akkustroms (37) nicht überschritten wird.

2.  Verfahren nach Anspruch 1,
    **dadurch gekennzeichnet, dass** der Grenzwert des Akkustroms (37) einem maximal zulässigen Ladestrom des Akkupacks (3) entspricht.

3.  Verfahren nach Anspruch 1,
    **dadurch gekennzeichnet, dass** im Bremsbetrieb die Einstellung des feldbildenden ersten Motorstromanteils ($i_d$) derart erfolgt, dass im Bremsbetrieb des Elektromotors (1) bei gleicher rekuperativer Rückspeiseleistung ($P_{Battery}$) in den Akkupack (3) die Bremsleistung des Elektromotors (1) ansteigt.

4. Verfahren nach Anspruch 1,
**dadurch gekennzeichnet, dass** im Betrieb des feldgeführten Elektromotors (1) ein dreiphasiges Drehfeld aufgebaut wird, dass die in den Feldwicklungen (a, b, c) fließenden Ströme ($i_a$, $i_b$, $i_c$) des dreiphasigen Drehfeldes als Vektoren des Drehfeldes erfasst und elektronisch in einen Motorstrom (7) in zweidimensionaler Darstellung transformiert werden, dass der aus einem ersten, das Drehmoment bestimmenden momentbildenden Motorstromanteil ($i_q$) und einem zweiten, feldbildenden Motorstromanteil ($i_d$) zusammengesetzte Motorstrom (7) der zweidimensionalen Darstellung derart eingestellt wird, dass im Bremsbetrieb des Elektromotors (1) der feldbildende Motorstromanteil ($i_d$) ungleich Null ist.

5. Vorrichtung zur Durchführung eines Verfahrens nach Anspruch 1 zum Abbremsen eines feldgeführten Elektromotors (1) aus einem Stator (8) und einem Rotor (9), mit zumindest einem Akkupack (3) zum Betrieb des Elektromotors (1) mit einem Motorstrom (7), und mit einer zwischen dem Elektromotor (1) und dem zumindest einen Akkupack (3) vorgesehenen Steuervorrichtung (2) zur Einstellung des Motorstroms (1), wobei der Stator (8) mehrere Feldwicklungen (a, b, c) trägt, die zur Ausbildung eines elektromagnetischen Drehfeldes angeordnet sind, und die Steuervorrichtung (2) ausgebildet ist, im Motorbetrieb die Feldwicklungen (a, b, c) des Stators in Abhängigkeit der Drehlage des Rotors (9) in Drehrichtung (10) antreibend zu bestromen, und die Steuervorrichtung (2) ausgebildet ist, die im Bremsbetrieb in den Feldwicklungen (a, b, c) des Stators (8) induzierten Spannungen als Rückspeiseleistung ($P_{Battery}$) dem Akkupack (3) zur Aufladung zuzuführen,
**dadurch gekennzeichnet, dass** die Vorrichtung (40) einen Wandler (41) aufweist, der ausgebildet ist, die in den Feldwicklungen (a, b, c) fließenden Ströme ($i_a$, $i_b$, $i_c$) des mehrphasigen Drehfeldes als Vektoren des Drehfeldes zu erfassen und elektronisch in einen Motorstrom (7) in zweidimensionaler Darstellung zu transformieren, wobei der Motorstrom (7) der zweidimensionalen Darstellung aus einem feldbildenden, ersten Motorstromanteil ($i_d$) und einem das Drehmoment bestimmenden, zweiten Motorstromanteil ($i_q$) zusammengesetzt ist, und dass die Vorrichtung (40) ein Regelglied (42) aufweist, das geeignet ist, die Motorstromanteile ($i_d$, $i_q$) des zweidimensionalen Motorstroms (7) in Abhängigkeit des Betriebszustandes des Elektromotors (1) und von vorgegebenen Grenzwerten derart einzustellen, dass im Bremsbetrieb des Elektromotors (1) der erste, feldbildende Motorstromanteil ($i_d$) des Motorstroms (7) ungleich Null ist, derart, dass bei gleicher rekuperativer Rückspeiseleistung ($P_{Battery}$) in den Akkupack (3) die Bremsleistung des Elektromotors (1) ansteigt.

6. Vorrichtung nach Anspruch 5,
**dadurch gekennzeichnet, dass** der Elektromotor (1) ein Synchronmotor ist.

7. Vorrichtung nach Anspruch 5,
**dadurch gekennzeichnet, dass** der Elektromotor (1) ein Asynchronmotor ist.

8. Vorrichtung nach Anspruch 5,
**dadurch gekennzeichnet, dass** der Elektromotor (1) der Antriebsmotor in einem handgeführten Arbeitsgerät ist.

9. Vorrichtung nach Anspruch 5,
**dadurch gekennzeichnet, dass** der Elektromotor (1) der Antriebsmotor in einem tragbaren Arbeitsgerät ist.

10. Vorrichtung nach Anspruch 5,
**dadurch gekennzeichnet, dass** der Elektromotor (1) der Antriebsmotor in einem bodengeführten Arbeitsgerät ist.

*FIG. 1*

*FIG. 2*

*FIG. 3*

FIG. 4

FIG. 5

FIG. 6

Europäisches
Patentamt

European
Patent Office

Office européen
des brevets

## EUROPÄISCHER RECHERCHENBERICHT

**Nummer der Anmeldung**

EP 21 17 2862

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 950 878 A1 (TOYOTA MOTOR CO LTD [JP]) 30. Juli 2008 (2008-07-30) * Zusammenfassung; Abbildungen 1-8 * * Absatz [0037] - Absatz [0105] * ----- | 1-10 | INV. H02P21/06 H02P3/18 H02J7/00 H02J7/14 |
| A | US 5 583 406 A (MUTOH NOBUYOSHI [JP] ET AL) 10. Dezember 1996 (1996-12-10) * Zusammenfassung; Abbildungen 1-5 * ----- | 7 | |
| A | EP 3 751 723 A1 (BLACK & DECKER INC [US]) 16. Dezember 2020 (2020-12-16) * Zusammenfassung; Abbildungen 1-4,8-10 * ----- | 8-10 | |

**RECHERCHIERTE SACHGEBIETE (IPC)**

H02P
H02J

Der vorliegende Recherchenbericht wurde für alle Patentansprüche erstellt

| Recherchenort | Abschlußdatum der Recherche | Prüfer |
|---|---|---|
| München | 21. Oktober 2021 | Zeng, Wenyan |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 2862

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-10-2021

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1950878 | A1 | 30-07-2008 | BR | PI0617921 | A2 | 17-04-2012 |
| | | | CN | 101297471 | A | 29-10-2008 |
| | | | EP | 1950878 | A1 | 30-07-2008 |
| | | | JP | 4561616 | B2 | 13-10-2010 |
| | | | JP | 2007151336 | A | 14-06-2007 |
| | | | KR | 20080060290 | A | 01-07-2008 |
| | | | RU | 2379821 | C1 | 20-01-2010 |
| | | | US | 2009243522 | A1 | 01-10-2009 |
| | | | WO | 2007049810 | A1 | 03-05-2007 |
| US 5583406 | A | 10-12-1996 | DE | 4440823 | A1 | 18-05-1995 |
| | | | JP | 3232823 | B2 | 26-11-2001 |
| | | | JP | H07143611 | A | 02-06-1995 |
| | | | KR | 950013815 | A | 15-06-1995 |
| | | | US | 5583406 | A | 10-12-1996 |
| EP 3751723 | A1 | 16-12-2020 | EP | 3751720 | A1 | 16-12-2020 |
| | | | EP | 3751723 | A1 | 16-12-2020 |
| | | | EP | 3751724 | A1 | 16-12-2020 |
| | | | US | 2020389108 | A1 | 10-12-2020 |
| | | | US | 2020389109 | A1 | 10-12-2020 |
| | | | US | 2020389110 | A1 | 10-12-2020 |

EPO FORM P0461

Für nähere Einzelheiten zu diesem Anhang : siehe Amtsblatt des Europäischen Patentamts, Nr.12/82